# EUROPEAN PATENT SPECIFICATION

(11) **EP 4 281 932 B1**
(45) Date of publication and mention of the grant of the patent: **25.03.2026**
(21) Application number: 22702619.2
(22) Date of filing: 18.01.2022
(51) Int. Cl.: G06T 7/11, G06T 7/187, G06V 10/26

(54) **SEGMENT SHAPE DETERMINATION**
SEGMENTFORMBESTIMMUNG
DÉTERMINATION DE LA FORME D'UN SEGMENT

(30) Priority: 20.01.2021 WO PCT/CN2021/072810
(43) Date of publication of application: 29.11.2023
(73) Proprietor: Koninklijke Philips N.V., 5656 AG Eindhoven (NL)
(72) Inventor: HAO, Zhangpeng, 5656 AG Eindhoven (NL)
(74) Representative: Philips Intellectual Property & Standards
(86) International application number: PCT/EP2022/050927
(87) International publication number: WO 2022/157124

(56) References cited:
- US-B2- 9 984 458
- BOSKAMP T ET AL: "New vessel analysis tool for morphometric quantification and visualization of vessels in CT and MR imaging data sets", RADIOGRAPHICS, THE RADIOLOGICAL SOCIETY OF NORTH AMERICA, US, vol. 24, no. 1, 1 January 2004 (2004-01-01), pages 287 - 297, XP003001612, ISSN: 0271-5333, DOI: 10.1148/RG.241035073
- "Volume 5: Methods in Cardiovascular and Brain Systems", vol. 5, 1 January 2005, WORLD SCIENTIFIC PUBLISHING CO. PTE. LTD., ISBN: 978-9-81-270104-6, article TOBIAS BOSKAMP ET AL: "GEOMETRICAL AND STRUCTURAL ANALYSIS OF VESSEL SYSTEMS IN 3D MEDICAL IMAGE DATASETS", pages: 1 - 60, XP055104761, DOI: 10.1142/9789812701046_0001
- SUHUAI LUO ET AL: "A Knowledge-based Approach for Segmenting Cerebral Vasculature in Neuroimages", MEASURING TECHNOLOGY AND MECHATRONICS AUTOMATION (ICMTMA), 2011 THIRD INTERNATIONAL CONFERENCE ON, IEEE, 6 January 2011 (2011-01-06), pages 74 - 77, XP031918478, ISBN: 978-1-4244-9010-3, DOI: 10.1109/ICMTMA.2011.25

## Description

### TECHNICAL FIELD OF THE INVENTION

The invention relates to a method, a tangible machine-readable medium and device for determining a segment shape from, for example, computed tomography (CT) imaging data.

### BACKGROUND OF THE INVENTION

A subject's body may be imaged, for example, using a CT imaging apparatus for various purposes such as diagnostics, medical intervention, etc. A three-dimensional (volume) reconstruction image and/or associated multiplanar reconstruction (MPR) images obtained from imaging data such as a set of CT imaging slices may show various anatomical structures within a subject's body.

Segmentation of target tissue in a reconstructed image may be used to assist a user such as a clinician in the analysis of a clinical situation such as identification and/or measurement of a lesion. Segmentation may refer to highlighting, labeling, identifying or otherwise extracting the target tissue relative to the surrounding tissues, which may make it easier for the user to visualize the target tissue. An example function for visualizing the segmentation may be the simulated 'dye-injection' function used for extracting target tissue. However, the 'inject dye' function to highlight target tissue in a processed image may be hard to use for vessel extraction since a vessel's section may be small or not bright enough on certain images. A user may have to spend time dealing with such a situation, for example, if leakage of the simulated dye occurs due to the vicinity of nearby structure such as bone in the image when highlighting the vessel.

Instead, a user may manually extract the vessel to avoid dealing with simulated dye leakage. The time spent by the user and accuracy of vessel extraction may depend on the user's experience.

The articles by Boskamp et al, "New Vessel analysis tool for morphometric quantification and visualization of vessels in CT and MR imaging data sets", in Radiographics, The Radiological Society of North America, US, vol. 24, no. 1, 1 January 2004, pages 287-297, DOI:10.1148/RG.241035073, and "Geometrical and Structural analysis of vessel systems in 3D medical image datasets", in Vol.5 of Methods in Cardiovascular and Brain Systems, 1 January 2005, World Scientific Publishing Co. Pte. Ltd., ISBN:978-9-81-270104-6, DOI:10.1142/9789812701046_001, both disclose concepts for visualization and quantitative analysis of vessel systems in CT and MRI datasets, including the segmentation and skeletonization of vessels in CT and MRI images.

The article "A Knowledge-based Approach for Segmenting Cerebral Vasculature in Neuroimages" by Suhuai Luo et al, in 2011 3rd International Conference on Measuring Technology and Mechatronics Automation (ICMTMA), 6 January 2011, pages 74-77, DOI:10.1109/ICMTMA.2011.25, ISBN:978-1-4244-9010-3 discloses a vasculature segmentation algorithm based on intensity distribution and region growing.

US 9,984,458 discloses segmentation of vascular structures by an iterative region growing and morphological operations.

### SUMMARY OF THE INVENTION

Aspects or embodiments described herein may relate to vessel segmentation, which may be performed automatically, in a reconstructed image derived from radiographic imaging data. Aspects or embodiments described herein may obviate one or more problems associated with vessel segmentation and/or simulated dye injection functionality.

In a first aspect, a method is described according to claim 1.

Some embodiments relating to the first and other aspects are described below.

In some embodiments, the method comprises generating a simulation of the segment shape. The method may further comprise causing the simulation to be displayed on a user interface. For example, a simulation or a virtual reality image of the subject can be updated to include the simulation of the segment shape.

In some embodiments, the method comprises displaying the determined segment shape as an overlay of a simulation of the subject, and, responsive to user input, updating a simulation of the subject on basis of the determined segment shape. For example, the determined segment shape is projected onto a view plan of a simulation of the subject. Projecting the determined segment shape is less complex than generating a simulation of the determined segment shape. In this way, a feedback about the segmentation outcome can be presented to the user with less computational effort. For example, when the user indicates the stop of the segmentation, e.g. by releasing the mouse button, a simulation of one or more determined segment shape can be generated. In an embodiment, the simulation of the subject can be updated by re-rendering the subject and the one or more segment shape. In another embodiment, only a portion of the subject, e.g. where the one or more segment shape locate, is re-rendered together with the one or more segment shape locates.

In some embodiments, the method comprises determining an additional segment shape of the vessel connected to the determined segment shape and, responsive to user input, causing a simulation of the segment shape and the additional segment shape to be displayed on the user interface.

In some embodiments, the region is centered around a seed point. A size of the region may be based on the region comprising radiographic imaging values indicative of both presence and lack of presence of the vessel within the region. A range defined by the pair of threshold values may comprise the radiographic imaging value at the seed point.

In some embodiments, estimating the pair of threshold values comprises, prior to classifying the set of radiographic imaging values, normalizing the radiographic imaging values based on a range of radiographic imaging values selected for display on a user interface.

In some embodiments, upon classifying the set of radiographic imaging values according to the pair of threshold values, the method comprises de-normalizing the normalized radiographic imaging values.

In some embodiments, the classifying is based on a k-means clustering procedure.

In some embodiments, the pair of thresholds are set according to contrast between radiographic imaging values associated with the vessel and radiographic imaging values associated with features surrounding the vessel.

In some embodiments, the vessel model is based on the boundary having an elliptical profile.

In some embodiments, the method comprises identifying, within a cross-section of another region derived from the radiographic imaging data, the other boundary of the vessel by determining whether a structure, defined by the set of radiographic imaging values within the cross-section of the other region, corresponds to the vessel model.

In some embodiments, the method comprises determining the segment shape of the vessel by estimating a surface profile of the vessel connecting the boundaries of the vessel identified within the region and the other region.

In a second aspect, a tangible machine readable medium is described. The tangible machine-readable medium comprises instructions which, when executed by at least one processor, cause the at least one processor to implement the method according to any of the first aspect or related embodiments.

In a third aspect, a device is described. The device is for segmenting a vessel imaged by a radiographic imaging apparatus. The device comprises at least one processor communicatively coupled to an interface for receiving radiographic imaging data of a subject obtained by the radiographic imaging apparatus. The device further comprises a tangible machine-readable medium storing instructions readable and executable by the at least one processor to perform a method according to any of the first aspect or related embodiments.

These and other aspects of the invention will be apparent from and elucidated with reference to the embodiment(s) described hereinafter.

### BRIEF DESCRIPTION OF DRAWINGS

Exemplary embodiments of the invention will now be described, by way of example only, with reference to the following drawings, in which:
Figure 1 refers to a method of determining a segment shape of a vessel according to an embodiment;
Figure 2 is a schematic drawing of a system for determining a segment shape of a vessel according to an embodiment;
Figure 3 refers to a method of determining a segment shape of a vessel according to an embodiment;
Figure 4 shows a reconstructed image of a subject including a vessel extracted according to an embodiment;
Figure 5 refers to a method relating to determining a segment shape of a vessel according to an embodiment;
Figure 6 refers to a method relating to determining a segment shape of a vessel according to an embodiment;
Figure 7 refers to a method relating to determining a segment shape of a vessel according to an embodiment;
Figure 8 refers to a method relating to determining a segment shape of a vessel according to an embodiment;
Figure 9 is a schematic drawing of a machine-readable medium for determining a segment shape of a vessel according to an embodiment; and
Figure 10 is a schematic drawing of a device for determining a segment shape of a vessel according to an embodiment.

### DETAILED DESCRIPTION OF THE EMBODIMENTS

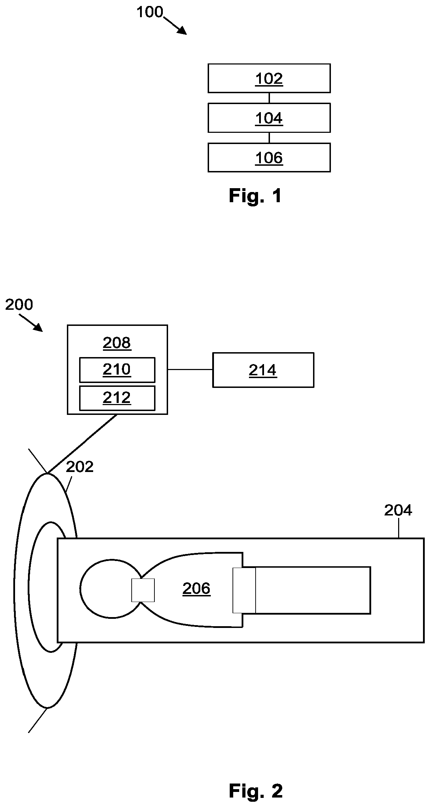

Figure 1 shows a method 100 (e.g., a computer-implemented method) of determining a segment shape of a vessel. Determining the segment shape of the vessel may be used to fulfil a simulated 'dye-injection' function in a reconstructed image derived from radiographic imaging data. The method 100 may be implemented by a computer such as a user computer communicatively coupled to a user interface, or a server or cloud-based service (e.g., communicatively coupled to the user computer and/or user interface).

The method 100 comprises, at block 102, estimating a pair of threshold values for classifying a region derived from radiographic imaging data of a subject based on whether or not a part of the region comprises a radiographic imaging value indicative of presence of a vessel.

The radiographic imaging data may comprise a set of radiographic imaging values (e.g., CT imaging values or other medical imaging values such as magnetic resonance imaging (MRI) values) indicative of the anatomical structure of the subject. For example, certain regions may have certain anatomical structures such as tissue, bone, etc., which yield certain radiographic imaging values according to the physical properties of the structure (e.g., X-ray absorption characteristics, etc). The pair of threshold values may be selected from the range of radiographic imaging values derived from the radiographic imaging data. For example, the pair of threshold values may comprise a lower threshold value and upper threshold value, where the range of radiographic imaging values between the lower and upper threshold values may correspond to the radiographic imaging values associated with the vessel structure.

Thus, within any region within the radiographic imaging data, the radiographic imaging values within the region may have a characteristic corresponding to a structure which might be indicative of presence of a vessel. For example, a vessel may have an a ring-shaped (or bore-like, or nearly circular) cross-section (which may have an elliptical profile where elliptical includes circular) such that if a corresponding elliptical or circular pattern of radiographic imaging values is observed in the region, the method 100 may further be able to identify which part of the region contains vessel-like structure.

As discussed in more detail herein, the pair of threshold values may be selected such that similar structures in other regions of the radiographic imaging data are classified as containing vessel-like structure while also preventing other regions containing bone or other non-vessel-like structures from being classified as containing vessel-like structure.

The method 100 further comprises, at block 104, identifying, within a cross-section of the region, a boundary of the vessel based on a set of radiographic imaging values classified according to the pair of threshold values.

The pair of threshold values may be used to classify which radiographic imaging values within the cross-section (e.g., as part of an MPR image) are associated with the boundary (e.g., wall) of the vessel. For example, any radiographic imaging values which cluster around another radiographic imaging value in the imaging data corresponding to a seed point (e.g., selected by the user as being likely to correspond to vessel structure) may have similar values to each other and therefore may be classified as belonging to the same class. The vessel structure (i.e., comprising the inner part of the vessel and the boundary/wall of the vessel) in an image may be represented as a cluster of radiographic imaging values within at least one class. The radiographic imaging values within the cluster may be similar to each other (i.e., relatively close to the radiographic imaging value corresponding to the seed point). Thus, once at least one class corresponding to at least one cluster has been identified then the radiographic imaging values within the at least one class may refer to vessel structure providing the at least one class comprises the seed point. The classified set of radiographic imaging values may represent an elliptical or circular shape within the cross-section. Thus, the parts of the cross-section corresponding to the classified set of radiographic imaging values may correspond to an indication of the boundary of the vessel.

The method 100 further comprises, at block 106, determining a segment shape of the vessel that connects the identified boundary of the vessel with another identified boundary of the vessel, e.g. a boundary identified in an adjacent region.

Since the boundary may be determined for in a cross-section of each of a plurality of regions, as referred to in block 104, the method 100 may determine a connection between the adjacent identified boundaries to form the segment shape. Thus, by connecting the identified boundaries from a plurality of regions of the vessel, the method 100 may obtain the shape of the vessel (e.g., segment-by-segment as each identified boundary is connected to the next identified boundary).

Accordingly, certain methods described herein (e.g., the method 100 and other methods described below) may provide an efficient and/or accurate way of extracting a vessel, which may reduce the level of manual user input involved to extract the vessel information from a reconstructed radiographic image. Certain radiographic imaging procedures refer to a dye-injection function where a user can select a certain part of the tissue and cause 'simulated' dye to be injected into that tissue to highlight this tissue with respect to the other tissues of the subject. As mentioned previously, such a procedure may be challenging for certain structures such as vessels (e.g., blood vessels). The method 100 may provide a relatively rapid dye injection function for vessel extraction since the classification of the radiographic imaging values may be relatively straightforward to compute according to the method 100. Further, a virtual reality image, or simulation, of the subject may include real-time feedback on the dye injection function due to the relatively ease of computation according to the method 100. In other words, the method 100 may be relatively easy to compute, while providing accurate simulated 'dye injection' results for vessels, such that real-time feedback can be provided for a user. In some embodiments, the real-time feedback comprises updating the virtual reality image (or a simulation) or in other words, re-rendering the virtual reality image after any segment shape is formed. In some other embodiments, the real-time feedback comprises projecting the determined segment shape as an overlay on the view plan of the virtual reality image after any segment shape is formed, and re-rendering the virtual reality image when the segmentation ends, e.g. as indicated by the user. In this way, the computational power can be further saved because the projecting is less computationally complex than the re-rendering.

Figure 2 shows a system 200 comprising certain components for implementing certain methods described herein (e.g., method 100 and other methods described below). The system 200 comprises a radiographic imaging apparatus (e.g., a CT scanner) 202, couch 204 and a subject 206 (e.g., a patient) supported by the couch 204. The radiographic imaging apparatus 202 is communicatively coupled to a computer 208 configured to receive radiographic imaging data from the radiographic imaging apparatus 202. The computer 208 comprises memory 210 (e.g., a tangible machine-readable medium) storing instructions for implementing certain methods described herein and at least one processor 212 for executing the instructions. The computer 208 is communicatively coupled to a user interface 214 (e.g., a display) providing certain information derived from the radiographic imaging data. For example, a three-dimensional reconstruction image and/or MPR image of the subject's body may be displayed on the user interface 214. In addition, the output from certain methods described herein (e.g., method 100) may be displayed on the user interface 214.

The computer 208 and/or user interface 214 may be implemented locally or remotely. For example, the computer 208 may be a local machine (e.g., a user computer in the vicinity of the radiographic imaging apparatus 202 or at another location) or a remote machine or computing system (e.g., a server and/or the cloud). The user interface 214 may be implemented locally (e.g., in the vicinity of the radiographic imaging apparatus 202 such as in a hospital where the radiographic imaging apparatus 202 is located) or at a remote location (e.g., where the analysis is performed collaboratively with the involvement of an expert at the remote location). The user interface 214 may include an MPR view window, which may be used when extracting the vessel.

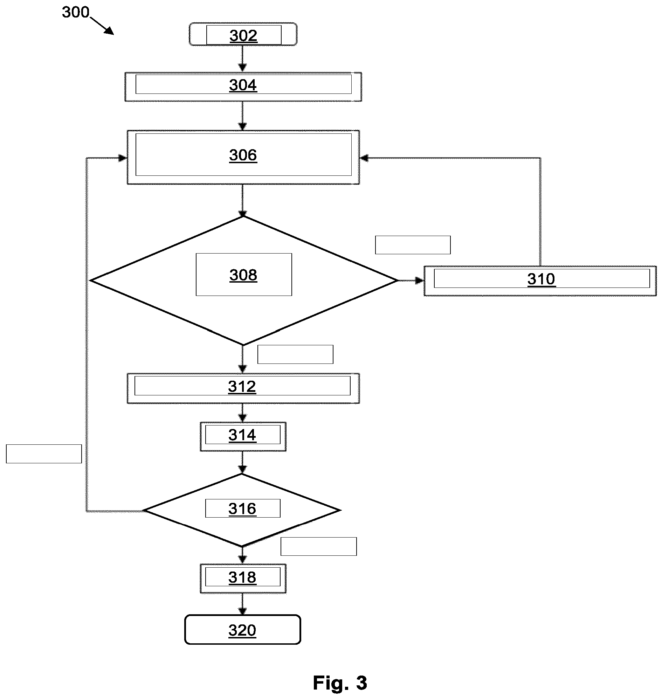

Figure 3 shows a method 300 (e.g., a computer-implemented method) of determining a segment shape of a vessel. The method 300 may be implemented by a computer such as a user computer communicatively coupled to a user interface, or a server or cloud-based service (e.g., communicatively coupled to the user computer and/or user interface). The method 300 may comprise the method 100 of Figure 1 although additional details of segment shape determination according to certain embodiments are discussed below in relation to Figure 3. Some blocks of the method 300 may be implemented in a different order to that shown by Figure 3, or even omitted entirely.

The method 300 starts at block 302 and proceeds to block 304 where the pair of threshold values are estimated (e.g., in accordance with block 102 of the method 100). As explained in more detail below, the threshold value estimation may comprise estimating the threshold value(s) in the region around a seed point corresponding to a location of interest within the reconstructed image (e.g., set by the user). The estimation of the pair of threshold values may be based on a cluster analysis.

The method 300 proceeds to block 306 where the region around the seed point (called current region) is grown to find one or more regions that are connected to the current region (called connecting regions of the current region) and that comprises radiographic imaging values falling between the pair of threshold values (which may be indicative of there being vessel structure in the connecting region). While these connecting regions are connected to the current region, any two of them can be either connected, or dis-connected). For example, in the case that the vessel bifurcates at the region, two connecting regions may belong to different branches and thus are disconnected.

Upon finding the connecting region, the method 300 proceeds to block 308 where a determination is made regarding whether the radiographic imaging values within the connecting region is ring-shaped, e.g. having an elliptical or circular shape (e.g., which may correspond to block 104 of the method 100). If no, at block 310, the region is marked as not containing vessel-like structure and the method 300 returns to block 306. If yes, at block 312, the region is marked as containing vessel-like structure and the method 300 proceeds to block 314 where a segment shape of the vessel between the connecting regions is rendered in the reconstructed image (e.g., an MPR image). That is, a segment of the vessel is extracted.

In some embodiments, at block 308, it is further determined whether the connecting region is a complete or partial ring-shaped, and at block 310, the region is marked as containing a vessel structure only if the connecting region has a shape of a complete ring. A connecting region having a shape of a complete ring is referred to as an independent connecting region. In this way, the segmentation accuracy can be further improved by reducing the chance of leaking to the surrounding tissues.

Providing the user indicates that the vessel extraction should continue at block 316, the method 300 returns to block 306 where the next region is found and assessed. For example, the user may indicate the continuation of the vessel extraction by means of holding the mouse button, or select an additional seed point location. At block 318, the method 300 performs a final render operation if the user has indicated that the rendering is to stop at block 316 (i.e., the vessel has been extracted to the level needed by the user). The method 300 ends at block 320. In other similar words, the method 300 segments the vessel region-by-region and the simulated dye injection function continues for as long as the user indicates, by means of e.g., a mouse-button click, a further an additional seed point location, or indicate the length of time for performing the segmentation operation (e.g., by mean of indicating continuation of segmentation by holding the mouse button and indicating the stop by releasing the mouse button or via multiple consecutive mouse clicks when segmentation is no longer needed).

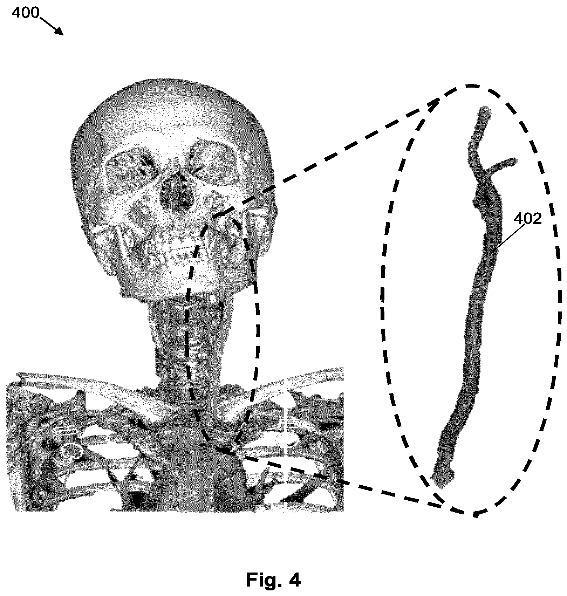

Figure 4 shows an example three-dimensional reconstructed image 400, e.g. a virtual reality image, of a subject's vessel 402 that has been extracted in accordance with certain embodiments. The expanded view in dashed lines shows the extracted vessel 402 in isolation from the rest of the anatomical features. In the viewing window of the user interface 214, the extracted vessel 402 may be highlighted in conjunction with the rest of the anatomical features or in isolation, depending on user preference.

Further embodiments relating to the vessel shape determination are described below.

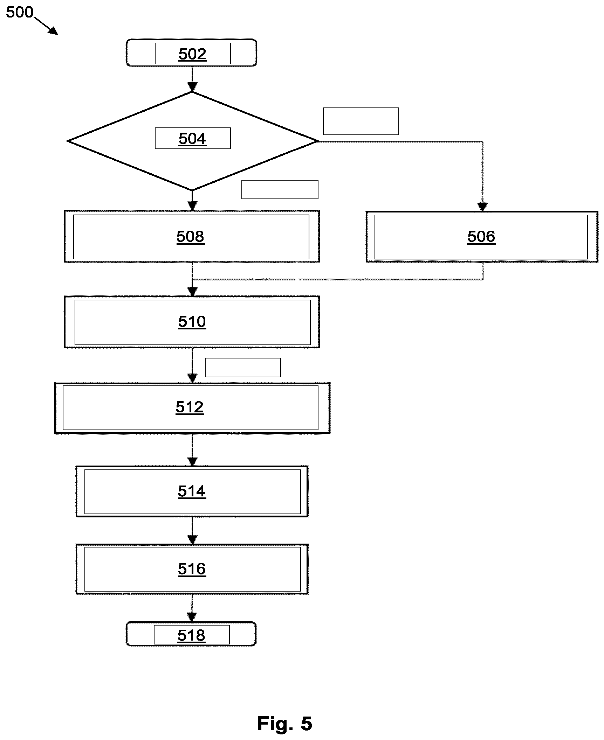

Figure 5 shows a method 500 (e.g., a computer-implemented method) of estimating a pair of threshold values (e.g., as part of the method 100). The method 500 may be implemented by a computer such as a user computer communicatively coupled to a user interface, or a server or cloud-based service (e.g., communicatively coupled to the user computer and/or user interface). Some blocks of the method 500 may be implemented in a different order to that shown by Figure 5, or even omitted entirely.

The method 500 starts at block 502 and proceeds to block 504 where a determination is made regarding whether a seed point (located on the target vessel) is already marked in a reconstructed radiographic image (e.g., an MPR image or three-dimensional reconstructed image). If not, the method 500 proceeds to block 506 where the seed point is marked and a search region represented as a cube centered on the seed point is defined. At block 506, the radiographic imaging values within the cube are counted (i.e., the radiographic imaging values within the cube are to be considered/taken into account when performing the rest of the method 500). If yes, the seed point is already marked, the method 500 proceeds to block 508 where the region around the already marked seed point is grown (e.g., similar to block 306 of the method 300) to obtain a region, within the radiographic imaging data, for calculating the pair of thresholds. At block 508, the radiographic imaging values within the grown region are counted (i.e., the radiographic imaging values within the grown region are to be considered/taken into account when performing the rest of the method 500).

In the example case where the radiographic imaging values refers to CT imaging values, the target vessel's CT imaging threshold (i.e., CT value range defined between the pair of threshold values) is determined. If the seed point is marked as vessel already (e.g., the user may want to grow the region based on an already segmented vessel), the method 500 grows along the segmented vessel and counts the CT imaging values of that vessel to determine the target vessel's CT threshold. If the seed point is not marked, the method 500 counts the CT value of a cube that centered on the seed point. The target vessel's CT threshold may be selected automatically depending on the CT imaging values in the region.

After either of blocks 506 or 508, the method 500 proceeds to block 510 where the radiographic imaging values (e.g., CT imaging value) are normalized within the region based on what is to be displayed on the user interface 214. For example, before the inject dye simulation is performed, the user may adjust the MPR image's window center (WC) and window level (WL) so that the target vessel is bright and clear. The result of the vessel extraction may be expected to obey a 'you get what you see' rule. Thus, according to block 510, the radiographic imaging values of the threshold value-containing region are normalized so that the segmentation may be represented as a bright region with respect to surrounding regions.

The WC and WL represent the range of radiographic imaging values (e.g., CT values) that a user selects for display on the user interface 214. For example, a CT value that is higher than this range may be represented by the pixel values (255,255,255), or white, on a color screen. Further, a CT value that is lower than this range may be represented by the pixel values (0,0,0), or black, on a color screen. The purpose of block 510 is to make sure that the subsequent threshold calculation is based on what the user sees on the display, rather than the original (non-normalized) radiographic imaging data itself. In other words, any radiographic imaging values that are out of the range are not be taken in account. Thus, in some embodiments, the normalizing at block 510 is based on a range of radiographic imaging values selected for display on the user interface 214.

The method 500 then proceeds to block 512 where the normalized radiographic imaging values are classified with a clustering method (e.g., the k-means clustering method). The clustering method may identify which parts of the region are similar to each other and therefore likely to correspond to independent structures such as vessel structure. Clusters of radiographic imaging values that are associated with each other within the cross-section may be indicative of presence of the vessel structure.

The classification may be performed on the basis that the distance within a class is small while the distance between classes is large. In other words, the radiographic imaging values that are close to each other (as well as being between the imaging threshold range) may be indicative of presence of vessel structure.

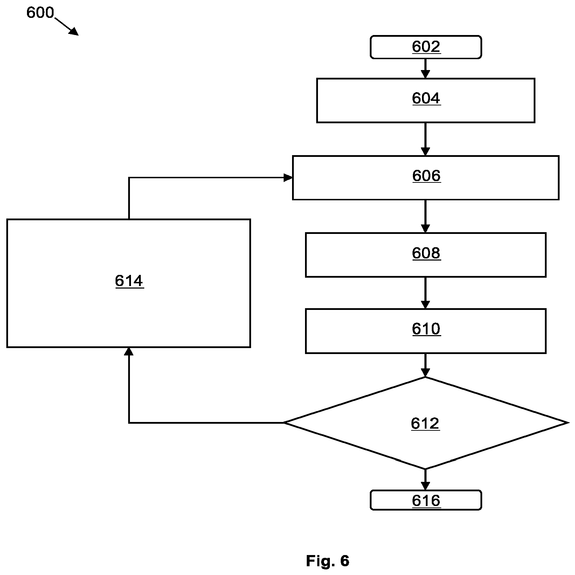

Reference is now made to Figure 6, which refers to a method 600 of performing the classification procedure according to block 512 of the method 500. The method 600 provides an explanation of an example implementation of a k-means method for classifying the radiographic imaging values in the indicated grown region.

The method 600 starts at block 602 and proceeds to block 604, where the average value (of the radiographic imaging values) is set as the center value of a first class.

The method 600 proceeds to block 606, where the distance between the class center and every point in the grown region, or cube, is calculated. If more than one class is present, the same calculation is performed where the distance between every class center and every point in the region is calculated.

The method 600 proceeds to block 608, where every point is classified to the closest class center. In the case of the first class, all points are classified to the center value of the first class.

The method 600 proceeds to block 610, where the maximum distance within (every) class is calculated.

The method 600 proceeds to block 612, where, if the maximum distance is bigger than a predefined threshold, the method 600 proceeds to block 614. The predefined threshold may refer to a maximum specified size of a class, for example, to ensure that each class is not too big relative to a typical vessel structure size. In other words, the classification may ensure that radiographic imaging values within a class likely correspond to vessel structure.

At block 614, the method 600 comprises adding a new class in the maximum inner distance class (i.e., in the region between the predefined threshold distance and the maximum distance). Further, the class center of the maximum inner distance class (i.e., the new class) is set to the boundary of the maximum distance class (i.e., at the maximum distance from the center of the first class). Once the new class is defined, it is added to the set of classes so that the method 600 at blocks 604 to 610 can be repeated for the previous class(es) and the new class. Once there are no new classes to add (i.e., the maximum distance from all of the classes does not meet the predefined threshold), the method 600 ends at block 616.

Once classified, the radiographic imaging values may be classified as <min1,max1>, <min2,max2>, <min3,max3>, etc., for class 1, class 2 and class 3, respectively. Thus, for the first class, there is a minimum ('min1') and maximum ('max1') radiographic imaging value, and so on. Thus, for each of the classes, the radiographic imaging values within each class may have a range defined by <min_j,max_j> where 'i' refers to the index of the class. The classification procedure described above may ensure that the distance between points within each class is small while the distance between classes is large. Accordingly, clusters of points associated with certain structures in the image may be identified in a way that may be distinguishable from other structures in the image, that may be less likely to be part of the target structure (e.g., the vessel). For example, each of the classes may comprise radiographic imaging values associated with a certain structure in the image. Thus, within a cluster associated with a class, the radiographic imaging values of the points within the cube or grown region that belong to the class may correspond to a certain structure. However, another cluster associated with another class may correspond to another structure. In some cases, there may be some overlap between classes where the radiographic imaging values belonging to different classes are actually associated with the same structure. As will be described below, the classified data may be re-organized to ensure that the pair of thresholds are selected based on the points that most likely correspond to vessel structure.

The classification may be considered to be a one-dimensional value classification performed on the radiographic imaging values. The pair of threshold values may be used to select which radiographic imaging values within the classified set of values correspond to the vessel structure.

Thus, within a class, there may be a set of radiographic imaging values that are similar (e.g., within a range that could be defined between the pair of threshold values) and the rest of the radiographic imaging values (in the other classes) may not be associated with the target vessel structure. The classified values that are within the range defined by the pair of threshold values may be considered to be vessel structure. In other words, there may be a contrast between the vessel and surrounding features and this contrast may be reflected by the classification of the radiographic imaging values.

In some embodiments, the pair of thresholds are set according to contrast between radiographic imaging values associated with the vessel and radiographic imaging values associated with features surrounding the vessel.

In some embodiments, the classifying is based on a k-means clustering procedure.

The extracted vessel in an MPR image may not be uniformly bright. For example, the inner part of the vessel may be brighter than the outer part (e.g., wall) of the vessel. The leak in segmentation may be expected to occur on the outer part. Therefore, a step-threshold (e.g., defined by the pair of threshold values) may be used to segment the inner part first to avoid leakage of the simulated dye.

Returning again to Figure 5, at block 514 of the method 500, the classes are re-organized around the seed point value to find the pair of threshold values (i.e., < ... < min3 < min2 < min1 < seed point value > max1 > max 2 > max 3>...>) such that radiographic imaging values within at least one of the ranges defined by the re-organized values are retained (e.g., to provide improved contrast with surrounding features). The radiographic imaging value(s) associated with the seed point (e.g., selected by the user) may be considered to be highly likely to correspond to vessel structure. Accordingly, any cluster associated with this seed point may be considered to be highly likely to correspond to the vessel structure. If the radiographic imaging value(s) associated with the seed point (i.e., the 'seed point value') is/are belong to one of the classes, then the classified radiographic imaging values may be re-organized around seed point value.

For example, taking the case where there are three identified classes (<min1,max1>, <min2,max2>, <min3,max3>), these may be re-organized around the seed point value in accordance with the following expression, < ... < min3 < min2 < min1 < seed point value > max1 > max2 > max 3 >...>, where the each of the ranges defined any of the classes (1, 2 or 3) may refer to any of the minimum or maximum values of the re-organized values. As an example, if the seed point value is associated with class 2, then the radiographic imaging values within this cluster are initially classified (at block 512) within the range <min2,max2>. However, upon re-organization at block 514, the minimum and maximum values within the range <min2,max2> are re-organized around the seed point value to be defined as <min1<seed point value>max1> so that the values within this range are considered to be vessel structure. In other words, the range of radiographic imaging values (<min1<seed point value>max1>) define a 'first priority' comprising the radiographic imaging values from class 2.

Providing sufficient data is in the re-organized range, the pair of threshold values are considered to be defined by the expression (<min1<seed point value<max1<). In the case that more information is needed (e.g., if more points are needed to adequately simulate vessel structure), further radiographic imaging values may be included in an extended range (i.e., <min2<min1<seed point value > max 1 > max 2) based on their closeness to the seed point value. For example, the extended range may include the limits of the nearby classes (i.e., the maximum value, max1, of class 1 and the minimum value, max3, of class 3). This extended range may be regarded as a 'second priority' range and includes radiographic imaging values that have been classified as being relatively close to the seed point value but have previously been associated with a different class. In this manner, additional points belonging to other classes may be associated with class 2. The range may be further extended to include the minimum value, min1, of class 1 and the maximum value, max3, of class 3. This further extended range may be referred to as the 'third priority' range and may be expressed as <min3<min2<min1<seed point value > max1 > max2 > max3 >, where min3 refers to the minimum value in class 1 and max 3 refers to the maximum value in class 3 in this example.

The radiographic imaging values that are located within the inner region (e.g., < min1 < seed point value > max1 >) around the seed point value associated with the class comprising the seed point value are grown first as part of the vessel segmentation procedure, described in more detail below. If there are no radiographic imaging values that are located within this inner region around the seed point value, the region is grown to include the outer part (i.e., to include at least one radiographic imaging value that is associated with another class that does not comprise the point corresponding to the seed point value). Since the radiographic imaging values selected from the class that is associated with the seed point value, it may be more likely that pixels corresponding to vessel structure are selected from the class, rather than non-vessel structure pixels (such as nearby bone structure, which may have been classified as belonging to another class).

The method 500 comprises classifying the set of radiographic imaging values into at least one class based on identifying at least one cluster within the set of the radiographic imaging values (e.g., using the k-means method), and selecting the pair of threshold values based on a re-organized set of the classified set of radiographic imaging values around a radiographic imaging value of a seed point associated with the vessel, wherein the at least one class comprises a range of radiographic imaging values that comprise the radiographic imaging value of the seed point. In some cases, the class comprising the radiographic imaging value corresponding to the seed point refers to a first class defining a range of radiographic imaging values of the points classified as being near to the seed point (i.e., a 'first cluster'). The limits of the range of radiographic imaging values associated with the first class (comprising the seed point value) may define the pair of thresholds (e.g., a 'first priority' range). In some cases, a limit associated with another range of radiographic imaging values associated with other classes (e.g., the classes associated with additional clusters in the data) may define the pair of thresholds. For example, the classes that are classified as being adjacent to the first class (e.g., class 2 in the above example) may define certain limits (i.e., minimum and maximum radiographic imaging values within the cluster) that may be used to define the pair of thresholds (i.e., the 'second priority' or 'third priority' discussed above).

At block 516 of the method 500, the pair of threshold values are denormalized to the original radiographic image values to obtain the corrected radiographic imaging values within the classified set that correspond to vessel structure. The seed point's radiographic imaging value may be included within the classified set to determine the step-threshold since the seed point may be considered likely to be part of the vessel structure. The method 500 ends at block 518.

Thus, in some embodiments, the region is centered around a seed point and a size of the region (e.g., as grown) is based on the region comprising radiographic imaging values indicative of both presence and lack of presence of the vessel within the region (e.g., prior to shrinkage as described below). A range defined by the pair of threshold values may comprise the radiographic imaging value at the seed point. Thus, the range may be used to select a set of radiographic imaging values indicative of presence of the vessel within the region while ignoring or removing the radiographic imaging values indicative of lack of presence of the vessel within the region.

In some embodiments, the method 500 comprises, upon classifying the set of radiographic imaging values according to the pair of threshold values, de-normalizing (e.g., in accordance with block 516) the normalized radiographic imaging values.

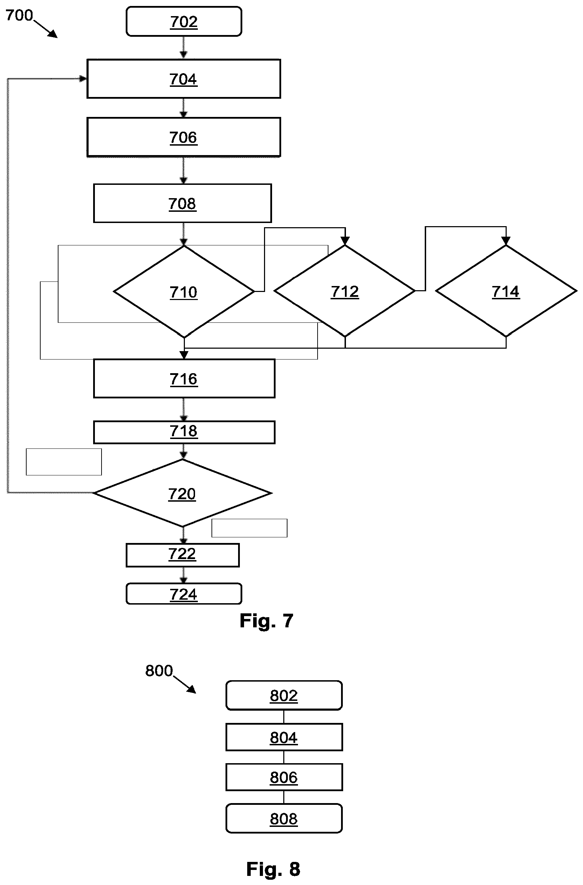

Figure 7 shows a method 700 (e.g., a computer-implemented method) of segmenting a target vessel (e.g., as part of the method 100). The method 700 may be implemented by a computer such as a user computer communicatively coupled to a user interface, or a server or cloud-based service (e.g., communicatively coupled to the user computer and/or user interface). Some blocks of the method 700 may be implemented in a different order to that shown by Figure 7, or even omitted entirely.

The method 700 starts at block 702 then proceeds to block 704 where the region is grown, as discussed in relation to block 306 of the method 300, based on the step-threshold (pair of thresholds) mentioned above (i.e., only the parts of the region with radiographic imaging values falling within the step-threshold may be considered to be part of the region). If necessary, the method 700 proceeds to block 706 where the region resulting from block 704 is shrunk to the parts of the region which appear to contain a region corresponding to possible vessel structure being present in the region. Otherwise, the method 700 proceeds to block 708 where the center of the region is calculated (i.e., the center corresponds to the origin of an elliptical or circular profile corresponding to vessel structure).

The method 700 proceeds to block 710 where a determination is made regarding whether the center is located on an ellipse or circle within the cross-section (e.g., corresponding to an axial section displayed as an MPR image). If no, the method 700 proceeds to block 712 where a determination is made regarding whether the center is located on an independent ellipse or circle on the coronal section displayed as an MPR image (which is perpendicular to the axial section). If no, the method 700 proceeds to block 714 where a determination is made regarding whether the center is located on an independent ellipse or circle on the sagittal section displayed as an MPR image (which is perpendicular to the axial and coronal sections). However, if yes to any of blocks 710, 712 or 714, the method 700 proceeds to block 716 where the region is marked as being part of the target vessel. Blocks 710 to 714 could be performed in any order.

A vessel may be regarded as having a tree-like structure, or tube, which means the local section of a vessel may be an ellipse at least on one of a set of orthogonal sections displayed as MPR images. The ellipse (or circle, which is a special case of an ellipse) may be independent (i.e., not connected to other tissue) to reduce leakage of simulated dye injection. The volume of region grown may depend on the area of the ellipse (i.e., a bigger volume corresponds to a larger cross-sectional area for the vessel). Thus, the size of the grown region depends on the vessel structure represented by the radiographic imaging data.

Thus, in some embodiments, identifying the boundary of the vessel (as referred to in block 104) comprises determining (e.g., in accordance with any of blocks 710, 712 or 714) whether a structure, defined by the set of radiographic imaging values within the cross-section of the region, corresponds to a vessel model indicative of the boundary of the vessel.

In some embodiments, the vessel model is based on the boundary having an elliptical profile (e.g., which includes a circular profile).

In some embodiments, the method 700 comprises identifying, within a cross-section of another region (e.g., after the method 700 returns to block 704) derived from the radiographic imaging data, the other boundary of the vessel by determining whether a structure, defined by the set of radiographic imaging values within the cross-section of the other region, corresponds to the vessel model.

In some embodiments, determining the segment shape of the vessel is implemented by estimating a surface profile of the vessel connecting the boundaries of the vessel identified within the region and the other region. The estimation of the surface profile may be based on the pair of threshold values indicating which part of the region between the connected boundaries is in the range defined by the pair of threshold values.

The method 700 proceeds to block 718 where the reconstructed image is updated (i.e., rendered) to include the extracted part of the vessel. Providing the user indicates, at block 720, that the method 700 should continue rendering the vessel, the method 700 returns to block 704. However, if the user indicates, at block 720, that the method 700 is to stop running, the final rendering operation is performed at block 722 before the method 700 ends at block 724.

Segmentation based on the imaging threshold may lead to dye leakage because the vessel region may connect to other tissue from time to time. Thus, by rendering the vessel segment-by-segment and observing the result in real-time, the marked vessel's shape during the segmentation may be observed for check for any potential leakage, which may increase accuracy of the vessel extraction.

Instead of segmenting an entire vessel in a single stage, the reconstructed image may be updated after every stage vessel segmentation to give user feedback. Rendering the entire image (e.g., the three-dimensional constructed image or other MPR image views) may not be fast enough and/or unnecessary, and therefore the method 700 may identify the segments in an MPR image to save computing power. Re-rendering of the entire three-dimensional reconstructed image may be performed after user stops the procedure (e.g., at block 722) to provide further or clearer visual information in the view displayed by the user interface 214, while avoiding any lag when performing the segmentation.

Certain vessels such as the internal carotid artery (ICA) and/or the vertebral artery (VA) may be imaged in certain scenarios. In this case, the segmentation of the aortic arch and vessels in the brain may be implemented separately, after simulation of dye injection in the vessels (e.g., the ICA and/or VA) between the aortic arch and brain vessels. Thus, for example with multiple mouse button clicks (e.g., 3 to 6 clicks), the four vessels, aortic arch and brain could be extracted in sequence, automatically.

Figure 8 shows a method 800 (e.g., a computer-implemented method) of determining a segment shape of a vessel (e.g., as part of the method 100). The method 800 may be implemented by a computer such as a user computer communicatively coupled to a user interface, or a server or cloud-based service (e.g., communicatively coupled to the user computer and/or user interface).

In some embodiments, the method 800 comprises generating, at block 804, a simulation of the segment shape and causing the simulation to be displayed on a user interface 214.

In some embodiments, the method 800 comprises determining, at block 806, an additional segment shape of the vessel connected to the determined segment shape and, responsive to user input (e.g., until user releases mouse button as discussed above), causing a simulation of the segment shape and the additional segment shape to be displayed on the user interface 214. Block 806 may refer to the functionality discussed in relation to blocks 314, 318, 718 and/or 722 (i.e., determining the shape of the vessel segment to render). The method 800 ends at block 808.

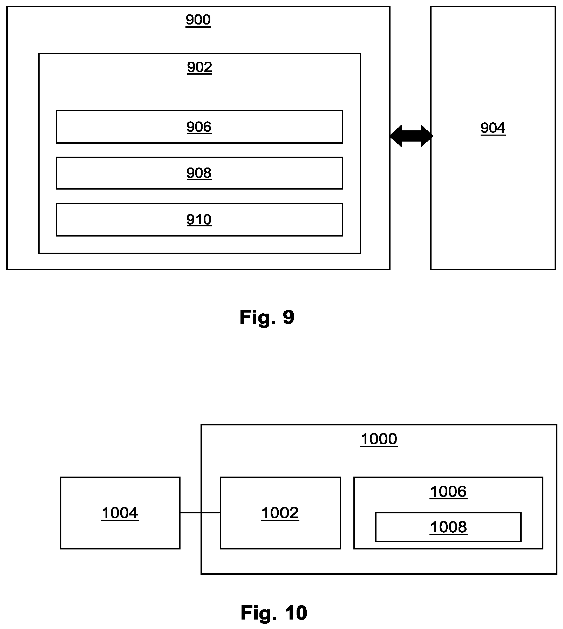

Figure 9 shows a tangible machine-readable medium 900. The tangible machine-readable medium 900 comprises instructions 902 which, when executed on at least one processor 904, cause the at least one processor 904 to implement certain methods described herein. In this embodiment, the instructions 902 comprise instructions 906 which are configured to implement block 102 of the method 100. The instructions 902 further comprise instructions 908 which are configured to implement block 104 of the method 100. The instructions 902 further comprise instructions 910 which are configured to implement block 106 of the method 100. Any of the methods described herein may be implemented by virtue of tangible machine-readable medium 900 causing the at least one processor 904 to implement such methods.

Figure 10 shows a device 1000 for determining a segment shape of a vessel. The device 1000 comprises at least one processor 1002 (which may correspond to the at least one processor 212 referred to in Figure 2). The at least one processor 1002 is communicatively coupled to an interface 1004 (e.g., a 'receiving' interface) for receiving radiographic imaging data of a subject obtained by the radiographic imaging apparatus (e.g., radiographic imaging apparatus 202). The interface 1004 may be part of the computer 208 referred to in Figure 2.

The device 1000 further comprises a tangible machine-readable medium 1006 (which may correspond to the memory 210 of Figure 2) storing instructions 1008 readable and executable by the at least one processor 1002 to perform a method corresponding to certain methods described herein (e.g., any of the methods 100, 300, 500, 600, 700, 800).

While the invention has been illustrated and described in detail in the drawings and foregoing description, such illustration and description are to be considered illustrative or exemplary and not restrictive; the invention is not limited to the disclosed embodiments. One or more features described in one embodiment may be combined with or replace features described in another embodiment.

Embodiments in the present disclosure can be provided as methods, systems or as a combination of machine-readable instructions and processing circuitry. Such machine-readable instructions may be included on a non-transitory machine (for example, computer) readable storage medium (including but not limited to disc storage, CD-ROM, optical storage, etc.) having computer readable program codes therein or thereon.

The present disclosure is described with reference to flow charts and block diagrams of the method, devices and systems according to embodiments of the present disclosure. Although the flow charts described above show a specific order of execution, the order of execution may differ from that which is depicted. Blocks described in relation to one flow chart may be combined with those of another flow chart. It shall be understood that each block in the flow charts and/or block diagrams, as well as combinations of the blocks in the flow charts and/or block diagrams can be realized by machine readable instructions.

The machine readable instructions may, for example, be executed by a general purpose computer, a special purpose computer, an embedded processor or processors of other programmable data processing devices to realize the functions described in the description and diagrams. In particular, a processor or processing circuitry, or a module thereof, may execute the machine readable instructions. Thus, functional modules of apparatus and other devices described herein may be implemented by a processor executing machine readable instructions stored in a memory, or a processor operating in accordance with instructions embedded in logic circuitry. The term 'processor' is to be interpreted broadly to include a CPU, processing unit, ASIC, logic unit, or programmable gate array etc. The methods and functional modules may all be performed by a single processor or divided amongst several processors.

Such machine readable instructions may also be stored in a computer readable storage that can guide the computer or other programmable data processing devices to operate in a specific mode.

Such machine readable instructions may also be loaded onto a computer or other programmable data processing devices, so that the computer or other programmable data processing devices perform a series of operations to produce computer-implemented processing, thus the instructions executed on the computer or other programmable devices realize functions specified by block(s) in the flow charts and/or in the block diagrams.

Further, the teachings herein may be implemented in the form of a computer program product, the computer program product being stored in a storage medium and comprising a plurality of instructions for making a computer device implement the methods recited in the embodiments of the present disclosure.

The invention is defined by the appended claims. Other variations to the disclosed embodiments can be understood and effected by those skilled in the art in practising the claimed invention, from a study of the drawings, the disclosure, and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. A computer program may be stored or distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. A computer-implemented method (100), comprising:
estimating (102) a pair of threshold values for being compared to radiographic imaging values to classify a region derived from radiographic imaging data of a subject, the estimation of the pair of threshold values based on whether or not a part of the region comprises a radiographic imaging value at a seed point indicative of presence of a vessel;
identifying (104), within a cross-section of the region, a boundary of the vessel based on a set of radiographic imaging values classified according to the pair of threshold values, wherein identifying the boundary of the vessel comprises determining whether a structure, defined by the set of radiographic imaging values within the cross-section of the region, corresponds to a vessel model indicative of the boundary of the vessel; and
determining (106) a segment shape of the vessel that connects the identified boundary of the vessel with another boundary of the vessel identified in a cross-section of a further region adjacent to the region;
**characterized in that** the method further comprises
classifying the set of radiographic imaging values into a plurality of classes based on identifying clusters within the set of the radiographic imaging values, each of the plurality of classes having a range of radiographic imaging values defined by [min_i, max_i] where i refers to an index of the class, wherein each range comprises the radiographic image value at the seed point;
re-organizing the ranges of the plurality of classes around a radiographic imaging value of the seed point as [min_n...[min_2 [min_1, max1] max_2]...max_n]; and
selecting the pair of threshold values based on the re-organized set of the classified set of radiographic imaging values around a radiographic imaging value of the seed point associated with the vessel.

2. The method (800) of claim 1, comprising generating (804) a virtual reality image of the segment shape and causing the virtual reality image to be displayed on a user interface (214).

3. The method (800) of claim 2, comprising displaying the segment shape as an overlay of a virtual reality image of the subject, and, responsive to user input, updating the virtual reality image of the subject on basis of the segment shape.

4. The method of claim 2, comprising determining (806) an additional segment shape of the vessel connected to the determined segment shape and, responsive to user input, causing a virtual reality image of the segment shape and the additional segment shape to be displayed on the user interface.

5. The method of any one of claims 1 to 4, wherein a size of the region is based on the region comprising radiographic imaging values indicative of both presence and lack of presence of the vessel within the region.

6. The method of any one of claims 1 to 5, wherein estimating the pair of threshold values comprises, prior to classifying the set of radiographic imaging values, normalizing (510) the radiographic imaging values based on a range of radiographic imaging values selected for display on a user interface.

7. The method of claim 6, comprising, upon classifying the set of radiographic imaging values according to the pair of threshold values, de-normalizing (516) the normalized radiographic imaging values.

8. The method of any one of claims 1 to 7, wherein the pair of thresholds are set according to contrast between radiographic imaging values associated with the vessel and radiographic imaging values associated with features surrounding the vessel.

9. The method of any one of claims 1-8, wherein the vessel model is based on the boundary being ring-shaped.

10. The method of any one of claims 1-9, comprising identifying, within a cross-section of the further region derived from the radiographic imaging data, the another boundary of the vessel by determining whether a structure, defined by the set of radiographic imaging values within the cross-section of the further region, corresponds to the vessel model.

11. The method of claim 12, comprising determining the segment shape of the vessel by estimating a surface profile of the vessel connecting the boundaries of the vessel identified within the region and the further region.

12. A tangible machine-readable medium (900) comprising instructions (902) which, when executed by at least one processor (904), cause the at least one processor to implement the method according to any one of claims 1 to 11.

13. A device (1000) for segmenting a vessel imaged by a radiographic imaging apparatus, the device comprising:
at least one processor (1002) communicatively coupled to an interface (1004) for receiving radiographic imaging data of a subject obtained by the radiographic imaging apparatus; and
a tangible machine-readable medium (1006) storing instructions (1008) readable and executable by the at least one processor to perform a method according to any of the claims 1-11.

## Patentansprüche

1. Computerimplementiertes Verfahren (100), umfassend:
Schätzen (102) eines Schwellenwertpaars zum Vergleichen mit radiographischen Bildgebungswerten, um eine aus radiographischen Bildgebungsdaten eines Subjekten abgeleitete Region zu klassifizieren, wobei die Schätzung des Schwellenwertpaars darauf basiert, ob ein Teil der Region einen radiographischen Bildgebungswert an einem Ausgangspunkt umfasst, der das Vorhandensein eines Gefäßes angibt, oder nicht;
Identifizieren (104), innerhalb eines Querschnitts der Region, einer Gefäßgrenze basierend auf einem Satz radiographischer Bildgebungswerte, die gemäß dem Schwellenwertpaar klassifiziert sind, wobei das Identifizieren der Gefäßgrenze Bestimmen umfasst, ob eine durch den Satz radiographischer Bildgebungswerte innerhalb des Querschnitts der Region definierte Struktur einem Gefäßmodell entspricht, das die Gefäßgrenze angibt; und
Bestimmen (106) einer Segmentform des Gefäßes, die die identifizierte Gefäßgrenze mit einer anderen Gefäßgrenze verbindet, die in einem Querschnitt einer weiteren Region, die an die Region angrenzent, identifiziert wurde;
**dadurch gekennzeichnet, dass** das Verfahren weiter Folgendes umfasst
Klassifizieren des Satzes radiografischer Bildgebungswerte in eine Vielzahl von Klassen basierend auf Identifizieren von Clustern innerhalb des Satzes radiografischer Bildgebungswerte, wobei jede der Vielzahl von Klassen einen Bereich von radiografischen Bildgebungswerten aufweist, der durch [min_i, max_i] definiert ist, wobei i sich auf einen Index der Klasse bezieht, wobei jeder Bereich den radiografischen Bildgebungswert am Ausgangspunkt umfasst;
Neuorganisieren der Bereiche der Vielzahl von Klassen um einen radiographischen Bildgebungswert des Ausgangspunktes als [min_n...[min_2 [min_1, max1] max_2]...max_n]; und
Auswählen des Schwellenwertpaars basierend auf des neu organisierten Satzes des klassifizierten Satzes radiographischer Bildgebungswerte um einen radiographischen Bildgebungswert des mit dem Gefäß verbundenen Ausgangspunkts.

2. Verfahren (800) nach Anspruch 1, umfassend Erzeugen (804) eines Virtual-Reality-Bildes der Segmentform und Veranlassen, dass das Virtual-Reality-Bild auf einer Benutzerschnittstelle (214) angezeigt wird.

3. Verfahren (800) nach Anspruch 2, umfassend Anzeigen der Segmentform als Überlagerung eines Virtual-Reality-Bildes des Subjekts und Aktualisieren des Virtual-Reality-Bildes des Subjekts auf Basis der Segmentform in Reaktion auf Benutzereingaben.

4. Verfahren nach Anspruch 2, umfassend Bestimmen (806) einer zusätzlichen Segmentform des Gefäßes, die mit der bestimmten Segmentform verbunden ist, und Veranlassen, in Reaktion auf Benutzereingaben, dass ein Virtual-Reality-Bild der Segmentform und der zusätzlichen Segmentform auf der Benutzerschnitstelle angezeigt wird.

5. Verfahren nach einem der Ansprüche 1 bis 4, wobei die Größe der Region auf der Region basiert, die radiographische Bildgebungswerte umfasst, die sowohl auf das Vorhandensein als auch auf das Fehlen des Gefäßes innerhalb der Region angibt.

6. Verfahren nach einem der Ansprüche 1 bis 5, wobei Schätzen des Schwellenwertpaars vor Klassifizieren deS Satzes radiografischer Bildgebungswerte Normalisieren (510) der radiografischen Bildgebungswerte basierend auf einem für die Anzeige auf einer Benutzerschnittstelle ausgewählten Bereichs radiografischer Bildgebungswerte umfasst.

7. Verfahren nach Anspruch 6, das nach Klassifizieren des Satzes radiographischer Bildgebungswerte gemäß dem Schwellenwertpaars Denormalisieren (516) der normalisierten radiographischen Bildgebungswerte umfasst.

8. Verfahren nach einem der Ansprüche 1 bis 7, wobei das Schwellenwertpaar entsprechend dem Kontrast zwischen radiografischen Bildgebungswerten, die dem Gefäß zugeordnet sind, und radiografischen Bildgebungswerten, die umgebenden Merkmale zugeordnet sind, eingestellt wird.

9. Verfahren nach einem der Ansprüche 1-8, wobei das Gefäßmodell darauf basiert, dass die Grenze ringförmig ist.

10. Verfahren nach einem der Ansprüche 1-9, umfassend Identifizieren, innerhalb eines Querschnitts, der weiteren Region, der aus den radiografischen Bildgebundsdaten abgeleitet wurde, der weiteren Gefäßgrenze durch Bestimmen, ob eine durch den Satz radiografischer Bildgebungswerte innerhalb des Querschnitts der weiteren Region der Struktur dem Gefäßmodell entspricht.

11. Verfahren nach Anspruch 12, umfassend Bestimmen der Segmentform des Gefäßes durch Schätzen eines Oberflächenprofils des Gefäßes, das die innerhalb der Region und der weiteren Region identifizierten Grenzen des Gefäßes verbindet.

12. Greifbares maschinenlesbares Medium (900), das Anweisungen (902) umfasst, die, wenn sie von mindestens einem Prozessor (904) ausgeführt werden, den mindestens einen Prozessor veranlassen, das Verfahren nach einem der Ansprüche 1 bis 11 zu implementieren.

13. Vorrichtung (1000) zur Segmentierung eines von einer radiografischen Bildgebungseinrichtung abgebildeten Gefäßes, wobei die Vorrichtung Folgendes umfasst:
mindestens einen Prozessor (1002), der kommunikativ mit einer Schnittstelle (1004) zum Empfangen von radiographischen Bildgebungsdaten eines Subjekts, die von der radiografischen Bildgebungseinrichtung erhalten werden, gekoppelt ist; und
ein greifbares maschinenlesbares Medium (1006), das Anweisungen (1008) speichert, die von dem mindestens einen Prozessor gelesen und ausgeführt werden können, um ein Verfahren nach einem der Ansprüche 1-11 durchzuführen.

## Revendications

1. Procédé mis en œuvre par ordinateur (100) comprenant :
une estimation (102) d'une paire de valeurs seuils à comparer aux valeurs d'imagerie radiographique pour classer une région dérivée de données d'imagerie radiographique d'un sujet, l'estimation de la paire de valeurs seuils étant basée sur le fait qu'une partie de la région comprenne ou non une valeur d'imagerie radiographique à un point de départ indiquant la présence d'un vaisseau ;
l'identification (104), dans une section transversale de la région, d'une limite du vaisseau sur la base d'un ensemble de valeurs d'imagerie radiographique classées selon la paire de valeurs seuils, dans lequel l'identification de la limite du vaisseau comprend la détermination si une structure, définie par l'ensemble des valeurs d'imagerie radiographique dans la section transversale de la région, correspond à un modèle de vaisseau indicatif de la limite du vaisseau ; et
la détermination (106) d'une forme d'un segment du vaisseau qui relie la limite identifiée du vaisseau à une autre limite du vaisseau identifiée dans une section transversale d'une autre région adjacente à la région ;
**caractérisé en ce que** le procédé comprend en outre
le classement de l'ensemble des valeurs d'imagerie radiographique en une pluralité de classes en fonction de l'identification de groupes au sein de l'ensemble de valeurs d'imagerie radiographique, chacune de la pluralité de classes présentant une plage de valeurs d'imagerie radiographique définie par [min_i, max_i] dans laquelle i fait référence à un index de la classe, dans lequel chaque plage comprend la valeur de l'image radiographique au point de départ ;
la réorganisation des plages de la pluralité de classes autour d'une valeur d'imagerie radiographique du point de départ comme [min_n... [min_2 [min_1, max1] max_2]... max_n] ; et
la sélection de la paire de valeurs seuils basée sur l'ensemble réorganisé de l'ensemble classifié des valeurs d'imagerie radiographique autour d'une valeur d'imagerie radiographique du point de départ associé au vaisseau.

2. Procédé (800) selon la revendication 1, comprenant la génération (804) d'une image de réalité virtuelle de la forme du segment et l'affichage de l'image de réalité virtuelle sur une interface utilisateur (214).

3. Procédé (800) selon la revendication 2, comprenant l'affichage de la forme du segment sous forme de superposition d'une image de réalité virtuelle du sujet et, en réponse à l'entrée de l'utilisateur, la mise à jour de l'image de réalité virtuelle du sujet sur la base de la forme du segment.

4. Procédé selon la revendication 2, comprenant la détermination (806) d'une forme de segment supplémentaire du vaisseau connecté à la forme de segment déterminée et, en réponse à l'entrée de l'utilisateur, l'affichage d'une image de réalité virtuelle de la forme du segment et de la forme de segment supplémentaire sur l'interface utilisateur.

5. Procédé selon l'une quelconque des revendications 1 à 4, dans lequel la taille de la région est basée sur la région comprenant des valeurs d'imagerie radiographique indiquant à la fois la présence et l'absence de présence du vaisseau dans la région.

6. Procédé selon l'une quelconque des revendications 1 à 5, dans lequel l'estimation de la paire de valeurs seuils comprend, avant de classer l'ensemble des valeurs d'imagerie radiographique, la normalisation (510) des valeurs d'imagerie radiographique sur la base d'une gamme de valeurs d'imagerie radiographique sélectionnées pour l'affichage sur une interface utilisateur.

7. Procédé selon la revendication 6, comprenant, après avoir classé l'ensemble des valeurs d'imagerie radiographique selon la paire de valeurs seuils, la dé-normalisation (516) des valeurs d'imagerie radiographique normalisées.

8. Procédé selon l'une quelconque des revendications 1 à 7, dans lequel la paire de seuils est définie en fonction du contraste entre les valeurs d'imagerie radiographique associées au vaisseau et les valeurs d'imagerie radiographique associées aux caractéristiques entourant le vaisseau.

9. Procédé selon l'une quelconque des revendications 1-8, dans lequel le modèle de vaisseau est basé sur une limite annulaire.

10. Procédé selon l'une quelconque des revendications 1-9, comprenant l'identification, dans une section transversale de la région supplémentaire dérivée des données d'imagerie radiographique, de l'autre limite du vaisseau en déterminant si une structure, définie par l'ensemble des valeurs d'imagerie radiographique dans la section transversale de la région supplémentaire, correspond au modèle du vaisseau.

11. Procédé selon la revendication 12, comprenant la détermination de la forme du segment du vaisseau en estimant un profil de surface du vaisseau reliant les limites du vaisseau identifiées dans la région et la région ultérieure.

12. Support (900) tangible lisible sur une machine comprenant des instructions (902) qui, lorsqu'elles sont exécutées sur au moins un processeur (904), amènent le au moins un processeur à mettre en œuvre le procédé selon l'une quelconque des revendications 1 à 11.

13. Dispositif (1000) de segmentation d'un vaisseau imagé par un appareil d'imagerie radiographique, le dispositif comprenant :
au moins un processeur (1002) couplé en communication à une interface (1004) pour recevoir des données d'imagerie radiographique d'un sujet obtenues par l'appareil d'imagerie radiographique ; et
un support tangible lisible par machine (1006) stockant des instructions (1008) lisibles et exécutables par le au moins un processeur pour effectuer un procédé selon l'une quelconque des revendications 1-11.
